# EUROPEAN PATENT APPLICATION

(11) **EP 4 576 758 A1**
(43) Date of publication of application: **25.06.2025**
(21) Application number: 24214343.6
(22) Date of filing: 20.11.2024
(51) Int. Cl.: H04N 1/60, G06T 7/90

(54) **IMAGE COLOR TONE ADJUSTMENT**

(30) Priority: 18.12.2023 US 202318544282
(71) Applicant: Lenovo (Singapore) Pte. Ltd, New Tech Park 556741 (SG)
(72) Inventor: NICHOLSON, John Weldon, Cary, 27513 (US); CROMER, Daryl, Raleigh, 27614 (US); LOCKER, Howard, Cary, 27513 (US)
(74) Representative: Openshaw & Co.

(57) **Abstract**

One embodiment provides a method, the method including: receiving, at a color tone adjustment system, an image of a scene; identifying, using the color tone adjustment system, a light source providing illumination within the image; and adjusting, using the color tone adjustment system, a color tone of the image based upon characteristics of the light source. Other aspects are claimed and described.

## Description

### BACKGROUND

Video conferencing or video calling is becoming commonplace. Within video conferencing or video calling, images are taken by an image capture device in rapid succession to be transmitted to other participants on the video conference or video call. Additionally, many people take images or videos using image capture devices. The image capture devices perform processing on an image or frame within a video so that the image looks like the real-world objects that are being depicted within the image or frame. In the case of video conferencing or video calling, the processed image is placed within the video stream or video feed with other processed frames and transmitted to the other participants within the video conference or video call. Technology allows such processing to occur very quickly, so the video conference or video call appears live or presented in substantially real-time. In the case of a user taking an image or video separately from a video conference or video call, the image or frame may be processed and then stored in an accessible data storage location.

### BRIEF SUMMARY

In summary, one aspect provides a method, the method including: receiving, at a color tone adjustment system, an image of a scene; identifying, using the color tone adjustment system, a light source providing illumination within the image; and adjusting, using the color tone adjustment system, a color tone of the image based upon characteristics of the light source.

Another aspect provides a system, the system including: a processor; a memory device that stores instructions that, when executed by the processor, causes the system to: receive, at a color tone adjustment system, an image of a scene; identify, using the color tone adjustment system, a light source providing illumination within the image; and adjust, using the color tone adjustment system, a color tone of the image based upon characteristics of the light source.

A further aspect provides a product, the product including: a computer-readable storage device that stores executable code that, when executed by a processor, causes the product to: receive, at a color tone adjustment system, an image of a scene; identify, using the color tone adjustment system, a light source providing illumination within the image; and adjust, using the color tone adjustment system, a color tone of the image based upon characteristics of the light source.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings. The scope of the invention will be pointed out in the appended claims.

### BRIEF DESCRIPTION OF THE SEVERAL VIEWS OF THE DRAWINGS

FIG. 1 illustrates an example of information handling device circuitry.
FIG. 2 illustrates another example of information handling device circuitry.
FIG. 3 illustrates an example method for adjusting the color tone of an image based upon characteristics of a light source providing illumination within the image.

### DETAILED DESCRIPTION

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout this specification to "one embodiment" or "an embodiment" (or the like) means that a particular feature, structure, or characteristic described in connection with the embodiment is included in at least one embodiment. Thus, the appearance of the phrases "in one embodiment" or "in an embodiment" or the like in various places throughout this specification are not necessarily all referring to the same embodiment.

Furthermore, the described features, structures, or characteristics may be combined in any suitable manner in one or more embodiments. In the following description, numerous specific details are provided to give a thorough understanding of embodiments. One skilled in the relevant art will recognize, however, that the various embodiments can be practiced without one or more of the specific details, or with other methods, components, materials, et cetera. In other instances, well known structures, materials, or operations are not shown or described in detail to avoid obfuscation.

The processing that is performed on an image or video frame is generally an automatic processing. The image capture device attempts to process the image in a manner that makes the image or frame appear to accurately capture the real-world scene and objects within the scene. To perform such processing, the image capture device not only captures the image or frame, but also takes measurements of different values of the environment or the image capture device while capturing the image or frame. One example of such captured sensor information is color values for red, green, and blue colors within the environment. The image capture device includes a sensor array that capture these sensor values while the image or frame is being captured. The image capture device then takes these values and recombines the colors in a manner such that the output image or frame looks correct.

Since different illumination sources, which may provide illumination of a scene, can have different color values, one technique that an image capture device employs is auto white balancing (AWB). Auto white balancing changes the color tone of an image that is presented to a user to account for different color temperatures of illumination sources. For example, some illumination sources may have an orange tone, blue tone, white tone, and/or the like. The auto white balancing of an image capture device adjusts the red-green-blue (RGB) values of the image to make the image look more representative of a neutrally illuminated scene captured within the image or frame. However, the image capture device makes assumptions about what the image should look like in order to determine the RGB values for the different channels when performing the auto white balancing. These assumptions are typically made when the camera sensor is manufactured and is based upon a curve between brightness level and intensity value across all color channels. These curves typically make it so that the RGB values are within a certain range at a given overall intensity value.

A basic approach is based upon a "gray world" theory that assumes across the whole frame the color average should be gray which is a balance of blue:yellow, green:magenta, and red: cyan. A more sophisticated approach is based upon the retinex theory that a correction ratio is identified for the brightest part of the frame and then linearly scaled for the whole frame. However, these techniques assume a color average that should be identified and then applied across the whole frame and also rely on a color curve defined during manufacture of the camera sensor. Thus, if one portion of the image has a high value for a particular color, that color will be compensated across the whole image even if it results in an image that does not look like the real-world scene. Some techniques that assist in accounting for differences in light source color temperatures require the use of separate devices. For example, a separate light meter may be used to measure the illuminant color temperature directly. However, this requires special hardware and requires the light meter to be able to communicate directly with the image capture device.

Some professional photographers may also carry a card or other item within a known white or gray color and uniform spectral response. The photographer can use this item to determine the illuminant color temperature and manually adjust the white balance. However, this requires the special item and requires the photographer to set up the image capture device based upon the item. When, or if, the illumination source or color temperature changes, the photographer must reset the image capture device using the special item. This takes additional time and requires the photographer to recognize when the color temperature has changed.

Accordingly, the described system and method provides a technique for adjusting the color tone of an image based upon characteristics of a light source providing illumination within the image. The color tone adjustment system receives an image. The image may have been captured by an image capture device, for example, in response to a user taking a picture or video, due to activation of a video conferencing or video calling software, and/or any other input that activates the image capture device. Receipt of the image may also be from a component other than the image capture device, for example, a data storage location, downstream processor from the image capture device, and/or the like. The color tone adjustment system identifies a light source providing illumination within the image. The light source may or may not be visible within the image, but the illumination caused by the light source will be visible within the image. The light source can be any type of illuminant including unnatural light sources (e.g., displays, lightbulbs, etc.) and natural light sources (e.g., sunlight, moonlight, stars, etc.). Some of the light sources may be controllable by the color tone adjustment system, meaning the system can provide instructions to change the illumination. Others may not be controllable the system.

Upon identifying the light source, the system may also identify characteristics of the light source. These characteristics may assist in determining a color temperature that is provided by the light source. The color tone adjustment system can then adjust the color tone of the image based upon the characteristics of the light source. For example, if the system determines that the light source is providing a red light, the system can adjust the color tone of the image to address the red hue while disregarding the normal curve for adjusting a red hue of the image. In the conventional systems, adjusting for this red hue may result in an image that has an overall cyan hue due to the normal balance between red and cyan.

Therefore, a system provides a technical improvement over traditional methods for color tone adjustment within an image. Instead of relying on color curves that are established while manufacturing the image capture device sensor, the color tone adjustment system can identify a light source that is providing illumination within an image and adjust the image based upon characteristics of that particular light source. This provides a more accurate technique for adjusting the color tone of an image as compared to conventional techniques which rely on color curves and then apply the color adjustment ratio across the entire image. Additionally, the described system and technique does not rely on the use of a secondary item to correctly identify the color tone of the illuminant or light source, thereby providing a system that is simpler and that requires less user input than the conventional techniques. The described system and method improve the functioning of the image capture device by creating a more accurate and consistent auto white balancing technique without requiring additional user input than conventional techniques.

The illustrated example embodiments will be best understood by reference to the figures. The following description is intended only by way of example, and simply illustrates certain example embodiments.

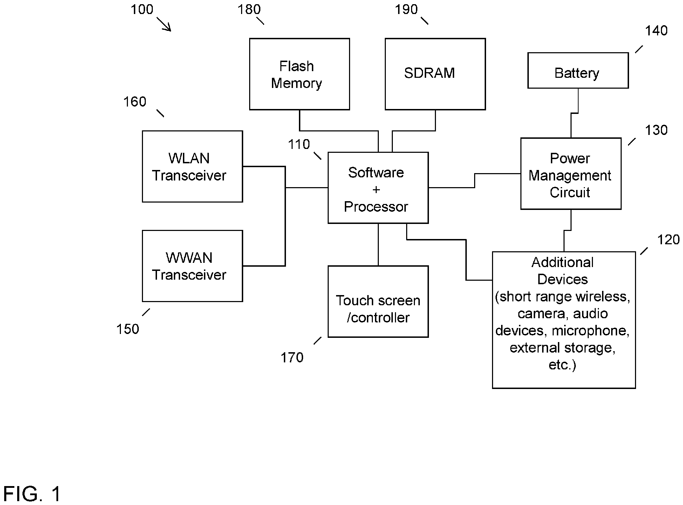

While various other circuits, circuitry or components may be utilized in information handling devices, with regard to smart phone and/or tablet circuitry 100, an example illustrated in FIG. 1 includes a system on a chip design found for example in tablet or other mobile computing platforms. Software and processor(s) are combined in a single chip 110. Processors comprise internal arithmetic units, registers, cache memory, busses, input/output (I/O) ports, etc., as is well known in the art. Internal busses and the like depend on different vendors, but essentially all the peripheral devices (120) may attach to a single chip 110. The circuitry 100 combines the processor, memory control, and I/O controller hub all into a single chip 110. Also, systems 100 of this type do not typically use serial advanced technology attachment (SATA) or peripheral component interconnect (PCI) or low pin count (LPC). Common interfaces, for example, include secure digital input/output (SDIO) and inter-integrated circuit (I2C).

There are power management chip(s) 130, e.g., a battery management unit, BMU, which manage power as supplied, for example, via a rechargeable battery 140, which may be recharged by a connection to a power source (not shown). In at least one design, a single chip, such as 110, is used to supply basic input/output system (BIOS) like functionality and dynamic random-access memory (DRAM) memory.

System 100 typically includes one or more of a wireless wide area network (WWAN) transceiver 150 and a wireless local area network (WLAN) transceiver 160 for connecting to various networks, such as telecommunications networks and wireless Internet devices, e.g., access points. Additionally, devices 120 are commonly included, e.g., a wireless communication device, external storage, etc. System 100 often includes a touch screen 170 for data input and display/rendering. System 100 also typically includes various memory devices, for example flash memory 180 and synchronous dynamic random-access memory (SDRAM) 190.

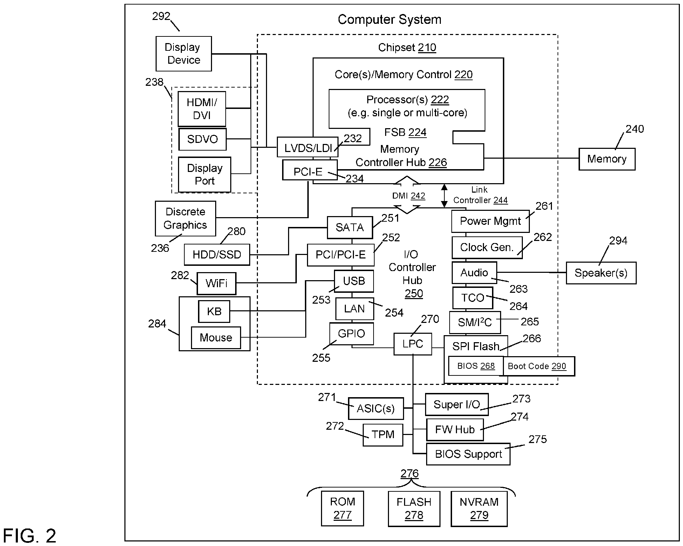

FIG. 2 depicts a block diagram of another example of information handling device circuits, circuitry, or components. The example depicted in FIG. 2 may correspond to computing systems such as personal computers, or other devices. As is apparent from the description herein, embodiments may include other features or only some of the features of the example illustrated in FIG. 2.

The example of FIG. 2 includes a so-called chipset 210 (a group of integrated circuits, or chips, that work together, chipsets) with an architecture that may vary depending on manufacturer. The architecture of the chipset 210 includes a core and memory control group 220 and an I/O controller hub 250 that exchanges information (for example, data, signals, commands, etc.) via a direct management interface (DMI) 242 or a link controller 244. In FIG. 2, the DMI 242 is a chip-to-chip interface (sometimes referred to as being a link between a "northbridge" and a "southbridge"). The core and memory control group 220 include one or more processors 222 (for example, single or multi-core) and a memory controller hub 226 that exchange information via a front side bus (FSB) 224; noting that components of the group 220 may be integrated in a chip that supplants the conventional "northbridge" style architecture. One or more processors 222 comprise internal arithmetic units, registers, cache memory, busses, I/O ports, etc., as is well known in the art.

In FIG. 2, the memory controller hub 226 interfaces with memory 240 (for example, to provide support for a type of random-access memory (RAM) that may be referred to as "system memory" or "memory"). The memory controller hub 226 further includes a low voltage differential signaling (LVDS) interface 232 for a display device 292 (for example, a cathode-ray tube (CRT), a flat panel, touch screen, etc.). A block 238 includes some technologies that may be supported via the low-voltage differential signaling (LVDS) interface 232 (for example, serial digital video, high-definition multimedia interface/digital visual interface (HDMI/DVI), display port). The memory controller hub 226 also includes a PCI-express interface (PCI-E) 234 that may support discrete graphics 236.

In FIG. 2, the I/O hub controller 250 includes a SATA interface 251 (for example, for hard-disc drives (HDDs), solid-state drives (SSDs), etc., 280), a PCI-E interface 252 (for example, for wireless connections 282), a universal serial bus (USB) interface 253 (for example, for devices 284 such as a digitizer, keyboard, mice, cameras, phones, microphones, storage, other connected devices, etc.), a network interface 254 (for example, local area network (LAN)), a general purpose I/O (GPIO) interface 255, a LPC interface 270 (for application-specific integrated circuit (ASICs) 271, a trusted platform module (TPM) 272, a super I/O 273, a firmware hub 274, BIOS support 275 as well as various types of memory 276 such as read-only memory (ROM) 277, Flash 278, and nonvolatile RAM (NVRAM) 279), a power management interface 261, a clock generator interface 262, an audio interface 263 (for example, for speakers 294), a time controlled operations (TCO) interface 264, a system management bus interface 265, and serial peripheral interface (SPI) Flash 266, which can include BIOS 268 and boot code 290. The I/O hub controller 250 may include gigabit Ethernet support.

The system, upon power on, may be configured to execute boot code 290 for the BIOS 268, as stored within the SPI Flash 266, and thereafter processes data under the control of one or more operating systems and application software (for example, stored in system memory 240). An operating system may be stored in any of a variety of locations and accessed, for example, according to instructions of the BIOS 268. As described herein, a device may include fewer or more features than shown in the system of FIG. 2.

Information handling device circuitry, as for example outlined in FIG. 1 or FIG. 2, may be used in devices such as tablets, smart phones, personal computer devices generally, and/or electronic devices, which may be used in devices or systems capture images, process images, analyze images, transmit images, and/or the like. For example, the circuitry outlined in FIG. 1 may be implemented in a tablet or smart phone embodiment, whereas the circuitry outlined in FIG. 2 may be implemented in a personal computer embodiment.

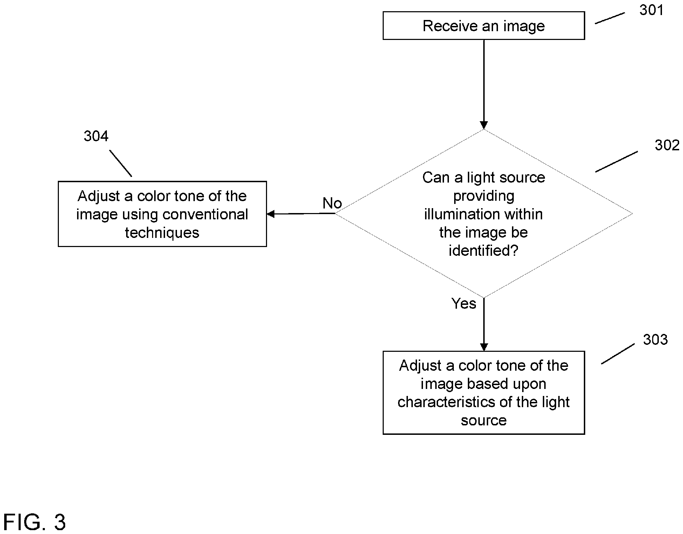

FIG. 3 illustrates an example method for adjusting the color tone of an image based upon characteristics of a light source providing illumination within the image. The method may be implemented on a system which includes a processor, memory device, output devices (e.g., display device, printer, etc.), input devices (e.g., keyboard, touch screen, mouse, microphones, sensors, biometric scanners, etc.), image capture devices, and/or other components, for example, those discussed in connection with FIG. 1 and/or FIG. 2. While the system may include known hardware and software components and/or hardware and software components developed in the future, the system itself is specifically programmed to perform the functions as described herein to adjust the color tone within an image based upon a light source providing illumination within the image. Additionally, the color tone adjustment system includes modules and features that are unique to the described system.

The activation of the color tone adjustment system may be manual, where a user provides an input indicating that the color tone adjustment system should be activated, or automatic where the color tone adjustment system detects a trigger event indicating that the system should be activated. Example trigger events include activation of the device or component of the color tone adjustment system, activation of software or an application utilizing the color tone adjustment system (e.g., video conference application, video call application, image capture system, image manipulation software, other application or software utilizing an image capture device, application utilizing or transmitting a video stream or feed, etc.), and/or the like. For example, the color tone adjustment system may be utilized with video conference or call software or image capture software. When the video conference or video call or image capture software is activated, the color tone adjustment system may also be activated. While the majority of this discussion will describe the color tone adjustment system as being used in connection with image capture software. However, this is a non-limiting example, as the color tone adjustment system can be utilized with any application or software which captures images, transmits images, and/or receives images.

The system may be utilized with any images that may be captured by an image capture device, transmitted to the color tone adjustment system, and/or otherwise accessible by the color tone adjustment system. The images may include still images or frames from a video, for example, a video within a video conferencing application. The color tone adjustment system may also be used in a plurality of different environments including, but not limited to, personal environment, business environments, public environments, office environments, global environments, and/or the like. In the case that images are captured as frames of a video, the processing of the images by the color tone adjustment system may occur as the frames of the video are captured, processed, and transmitted within a video stream in substantially real-time. Thus, the processing can be performed very quickly for each frame within a video or any other image which may or may not be part of a video feed or video stream.

Additionally, the processing or color tone adjustment may be utilized to make adjustments to frames or images that have not yet been captured. In other words, the color tone adjustment system may provide or identify adjustments that need to be made to correct or adjust the color tone. These adjustments can not only be utilized on frames or images that are received, but may also be utilized for subsequent frames or images that are captured by the image capture device. In a video, the color tone adjustment identifications may be made for every frame or may be made every few frames with frames for which an exact adjustment is not identified being adjusted using information identified for a previous frame. Similarly, color tone adjustment identifications may be made for every still image that is captured or may be made for a particular frequency of images. The images for which exact adjustments are not identified can be adjusted using previously identified adjustment information.

The color tone adjustment system may be a standalone system, may be accessible through other computing devices, and/or a combination thereof. For example, the color tone adjustment system may be a standalone system that can be accessed by a user and/or may be or provide an application that is accessible by a user on another computing device. The color tone adjustment system may be accessible using any type of computing device, for example, personal computer, laptop computer, smartphone, tablet, smartwatch, head-mounted display, smart television or other smart appliance, and/or the like.

The color tone adjustment system may have an associated graphical user interface. The graphical user interface may be provided on a display or monitor, which may or may not be associated with the color tone adjustment system. In other words, the color tone adjustment system may have a dedicated display or monitor or may be accessible using any display or monitor. In either case, the color tone adjustment system may provide instructions to generate and display the graphical user interface on the display device being used to access the color tone adjustment system. The graphical user interface may also be updated and managed based upon instructions provided by the color tone adjustment system. In other words, the color tone adjustment system generates and transmits instructions to create and update the graphical user interface.

The graphical user interface may include a plurality of tabs, windows, and/or unique interfaces. The graphical user interface may include graphical user interface icons or elements. Graphical user interface icons or elements may include static non-selectable elements (e.g., headers, footers, logos, global information areas, graphics, etc.), dynamic non-selectable elements (e.g., local information areas applying to a specific element, dynamic graphics, information areas that update based upon the information provided therein, indicators, statistics displays, etc.), static selectable elements (e.g., radio buttons, menu icons, selectable indicators, etc.), dynamic selectable elements (e.g., form field input areas, pull-down menus, pop-up windows, etc.), and/or any other elements that may be found in a graphical user interface.

The graphical user interface may allow a user to provide input identifying parameters to be used by the color tone adjustment system. For example, the color tone adjustment system may have different parameters for light source identification, characteristics identified for a particular light source, color tone adjustments assigned to or learned for a particular light source or light source characteristics, identifying applications that utilize the color tone adjustment system, and/or the like. Input may be provided by the user using any type of input modality, including, but not limited to, mechanical input (e.g., keyboard input, mouse input, etc.), touch input, audible or voice input, gesture input, haptic input, and/or the like. The graphical user interface may also provide displays that identify the parameters of the color tone adjustment system. It should be noted that the parameters can be different for different applications, different computing systems, different users, and/or the like. Thus, the parameters of the color tone adjustment system are not always the same. However, the color tone adjustment system may have default or system-wide settings that are the same across different users, systems, applications, and/or the like, until the parameters are adjusted or otherwise changed.

It should be noted that different users may configure the graphical user interface per their preferences. Thus, the graphical user interface layout and configuration may be different between users. How much a user can configure the layout may be restricted or set by a system administrator and/or the like. Additionally, different users or different user roles may have different levels of access, which may also change how and what information is displayed. Thus, different graphical user interfaces may be displayed by the system.

The color tone adjustment system may utilize one or more artificial intelligence models in identifying a light source, characteristics of the light sources, and color tone adjustments that should be made. For ease of readability, the majority of the description will refer to a single artificial intelligence model. However, it should be noted that an ensemble of artificial intelligence models or multiple artificial intelligence models may be utilized. Additionally, the term artificial intelligence model within this application encompasses neural networks, machine-learning models, deep learning models, artificial intelligence models or systems, and/or any other type of computer learning algorithm or artificial intelligence model that may be currently utilized or created in the future.

The artificial intelligence model may be a pre-trained model that is fine-tuned for the color tone adjustment system or may be a model that is created from scratch. Since the color tone adjustment system is used in conjunction with images and video, some models that may be utilized by the system are image analysis models, image generative models, image classification models, and/or the like. The model may be trained using one or more training datasets. Additionally, as the model is deployed, it may receive feedback to become more accurate over time. The feedback may be automatically ingested by the model as it is deployed. For example, as the model is used to identify light sources, characteristics of light sources, and the adjustments that should be made to the color tone of an image, if a user modifies the identification of a light source, characteristics of the light source, or the color tone of an image or otherwise provides some indication that the light source and/or light source characteristics or color tone adjustments may be incorrect, the model ingests this feedback to refine the model.

On the other hand, as the model identifies light sources and/or characteristics of light sources or color tone adjustments, and no changes are made to the identified light sources and/or characteristics of light sources or color tone adjustments, the model may utilize this as feedback to further refine the model. Training the model may be performed in one of any number of ways including, but not limited to, supervised learning, unsupervised learning, semi-supervised learning, training/validation/testing learning, and/or the like. Additionally, the model or models may be used in conjunction with computer vision in order to understand, interpret, and manipulate visual data.

As previously mentioned, an ensemble of models or multiple models may also be utilized. Some example models that may be utilized are variational autoencoders, generative adversarial networks, recurrent neural network, convolutional neural network, deep neural network, autoencoders, random forest, decision tree, gradient boosting machine, extreme gradient boosting, multimodal machine learning, unsupervised learning models, deep learning models, transformer models, inference models, and/or the like, including models that may be developed in the future. The chosen model structure may be dependent on the particular task that will be performed with that model.

The color tone adjustment system may include different components for carrying out different functions of the system, including different steps to be performed. One component that may be a part of the color tone adjustment system or may simply be in communication with the color tone adjustment system is an image capture device and associated components. The image capture device may be a camera or other device or component that can be utilized to capture images or frames, for example, an infrared image capture device, web camera, heat signature image capture device, traditional camera, night vision image capture device, camera integrated into an information handling device (e.g., laptop computer, tablet, smart watch, smart phone, smart appliance, television, smart television, etc.), and/or the like. The image capture device, referred to as a camera for ease of readability, may include integrated or otherwise associated components. These associated components may be components that perform functions only for the camera. For example, the associated components may include a camera module, ISP, camera drivers, camera processors, and/or the like.

While the image capture device may have components or modules that can perform auto white balancing, due to the design and manufacture of the camera sensor, this auto white balancing may be incorrect or result in images that do not correctly reflect the real-world objects within the scene. While, in some cases, the color tone adjustment system works as a module or component on the image capture device and in conjunction with the image capture device sensor, in other cases, the color tone adjustment system may perform functions using components outside of the image capture device.

In other words, the color tone adjustment system may be installed on or otherwise accessible by an image capture device allowing the image capture device to work as a single system without needing to communicate with other components outside of the image capture device. On the other hand, the color tone adjustment system may be implemented such that a downstream processor, driver, or other application, accesses and activates the color tone adjustment system. A downstream processing component (e.g., processor, driver, other application, etc.), is downstream with respect to the image capture device and a processing flow of the image capture device. Thus, the term downstream is with respect to a processing flow.

The downstream processing components may be any components, or software, that can be utilized to adjust a color tone of an image, for example, a GPU, CPU, NPU, processing driver, artificial intelligence model, and/or the like. The downstream processor, driver, or other application, may have better processing capabilities and/or algorithms than the camera module of the image capture device. For example, the downstream processor may be able to monitor more types of conditions or contexts than the image capture device camera module. As another example, the downstream processor may be able to perform more advanced image processing functions as compared to the image capture device. Thus, it may be beneficial to utilize a downstream processor to perform the functions or at least some of the functions of the color tone adjustment system. However, this is not strictly required and all of the functions of the color tone adjustment system could be performed using the image capture device and associated processors, drivers, and/or algorithms.

At 301, the color tone adjustment system receives an image. The image may be a still image, an image taken from a video (also referred to as a frame), an image from a sequence of still images, and/or the like. The image may include a scene having one or more objects. For example, the scene may include people, landscapes, buildings, devices, automobiles, objects, and/or the like, collectively referred to as "objects" for ease of readability. Receipt of the image may occur after the image is captured by the image capture device but before the image has been transmitted to another location, for example, within a video feed to another user, within a video feed in a video conferencing transmission, to a data storage location, and/or the like. Receipt of the image may also be from a data storage location, component other than an image capture device, and/or the like. Receipt of the image may include a user providing the image to the color tone adjustment system, the color tone adjustment system automatically receiving the image from a component such as the image capture device, the color tone adjustment system accessing a data storage location and pulling the image, and/or any other technique for obtaining an image.

How the image is received or otherwise obtained may be set within the graphical user interface, including through receipt of instructions within the graphical user interface from the user to access a location where one or more images may be stored. As another example, a user can set a data storage location within the graphical user interface and the color tone adjustment system may automatically obtain any images that are stored within that location, even when new images are added to the data storage location. A user may also identify one or more applications within the graphical user interface that interface with the color tone adjustment system. If those applications are activated, the color tone adjustment system may also be activated and work in conjunction with those applications to performed the described functions. For example, if a video conferencing application is opened, the color tone adjustment system may also be activated and as images or frames are captured by an image capture device, the color adjustment system performs the described functions.

Additionally, a predetermined frequency at which images are received by the color tone adjustment system may be set within the graphical user interface. For example, the user can identify that the system should check for new images at a predetermined time period. As another example, in the case of a video feed or sequence of still images, the user may identify how often frames or images should be transmitted to the color tone adjustment system. For example, instead of sending every frame that is captured by an image capture device within a video conference, the frequency may be set so that every second, third, fourth, and/or the like, frame is transmitted to the color tone adjustment system.

The predetermined frequency may also be based upon a trigger event that may indicate that a color tone adjustment is needed for an image. The trigger event may be a user providing input indicating the user would like the color tone of an image to be adjusted, for example, within an application via selection of an auto white balancing icon or user input area, a user providing audible input or gesture input indicating that a video feed or image needs a color tone adjustment, and/or the like. The trigger event may also be upon detection of a change between images, particularly with respect to illumination within the images. For example, if a light source is added or removed between images of a scene, the color tone adjustment system may be triggered. As another example, if a coloring or a color temperature of the illumination of a light source is changed between images of a scene, the color tone adjustment system may be triggered. Thus, environmental or context changes within the scene may cause the color tone adjustment system to be triggered.

At 302, the color tone adjustment system can determine if a light source providing illumination within the image can be identified. To determine if a light source can be identified, the system may attempt to identify the light sources that may be providing illumination. Identification of a light source may include identifying a specific light source (e.g., model of the light source, identifier of the light source, etc.) and/or may be identifying general information of the light source (e.g., type of light source, etc.). For simplicity, the discussion will refer to a single light source providing illumination within the image. However, it should be readily understood that multiple light sources may be providing illumination within the image and the described system and method can be applied to each of those light sources. Additional functions may also be available in the case of multiple light sources. It should be noted that the light source does not have to be included in the image. In other words, the source of the illumination within the image may not necessarily be included within the image. Additionally, the term light source refers to any object that provides illumination.

Light sources may be natural light sources (e.g., sun, moon, stars, fire, etc.) or unnatural light sources (e.g., lightbulbs, display screens of different devices, flashes of an image capture device, etc.). Additionally, some light sources or illumination caused by a light source may be controllable by the color tone adjustment system. For example, the color tone adjustment system may be in communication with an Internet of Things (IoT) environment, where different devices within an environment communicate with each other and can be controlled with instructions. In this case, the color tone adjustment system may be able to provide instructions to the IoT devices to adjust illumination caused by an IoT device. As another example, the color tone adjustment system may be part of a system or information handling device and may be able to provide instructions or communicate with light sources within that system, such as a display of the system or information handling device. As a final, non-limiting example, the system may be able to provide instructions to other devices or objects, which may be a part of an IoT environment, that result in a modification to illumination provided by a light source. For example, the system may be in communication with blinds or other window coverings and can provide instructions to close or open the window coverings, thereby adjusting or changing an amount of illumination caused by the sun or other outside light source.

The color tone adjustment system may also be able to receive transmissions from devices even if the color tone adjustment system cannot transmit instructions or control the devices. For example, the color tone adjustment system may be able to receive information from a light source that can provide illumination identifying characteristics, parameters, settings, and/or the like, of the light source. However, the system may be unable to provide instructions to this light source to change any of these characteristics, parameters, settings, and/or the like.

To determine if the light source can be identified, the color tone adjustment system may utilize information corresponding to the image. For example, the image may include metadata that identifies a geographical location where the image was captured, a time the image was captured, a user who captured the image or caused the image to be captured, and/or the like. Thus, the system may utilize metadata corresponding to the image to identify information corresponding to the image. This information may be utilized to identify light sources providing illumination within the image. For example, a time of day may assist in determining if a natural light source is the moon or sun. As another example, knowing the user who captured the image may provide information related to an environment that the user was located within when the image was captured. The system may have stored information related to an environment of the user including different light sources that are within the environment, a size of the environment, other objects within the environment, identification of controllable objects within the environment, and/or the like. In other words, the system may access a database or other data storage location that identifies light sources within a known environment. As new information is learned about an environment, the system or data storage location may be updated with the new information so it can be used at a later time.

The system may utilize one or more artificial intelligence models, algorithms, classifiers, parsing tools, and/or the like, to identify a context and environment from the image. In other words, the system may utilize an analysis technique to analyze the image and identify information contained within the scene of the image. As an example, the system may use an image parser or artificial intelligence model to identify objects within the image and then utilize a classifier to identify what type of object has been identified. For example, the system may use an analysis technique to identify light sources (e.g., lightbulbs, lamps, display screens generally, device specific display screens, light emitting diode (LED) objects, etc.) within the image. It should be noted that not all light sources or the objects generating illumination within the image may actually be captured in the image. For example, while the sun may be providing illumination within an image, the scene captured in the image may not include the sun.

The color tone adjustment system may also utilize secondary information sources to identify information corresponding to the image. Secondary information sources include any information sources that may provide information related to the image. Example secondary information sources include, but are not limited to, the Internet, a data storage location, applications or accounts of a user (e.g., calendar, social media account, text messaging application, email application, etc.), environment database, and/or the like. Accessing the secondary information sources may include querying the secondary information sources using information already identified about the image. For example, if the metadata indicates a user who cause the image to be captured, the system may access a secondary information source such as a calendar or schedule of the user, an email account of the user, a text messaging or social media account of the user, and/or the like. These secondary information sources may identify a location of a user, an application the user is utilizing, a location of where the user was when the image was captured, and/or the like. Another secondary information source may be the Internet or application. As an example, if the metadata indicates a geographical location and a time at which the image was taken, the system can query the Internet or a weather application to identify environmental conditions of the geographical location at the identified time.

The color tone adjustment system may also use other objects within the environment to identify light sources. Utilization of other objects may include querying other objects or systems within the environment for information related to light sources which may or may not be providing illumination within the environment. For example, the system may query IoT objects or other objects in communication with the color tone adjustment system within the environment to identify light sources within the environment. As an example, the color tone adjustment system may provide instructions to a system having a display to determine if the display of that system is off or on. As another example, the color tone adjustment system may request information from a hub or controller that communicates with a plurality of devices within the environment requesting information identifying which devices have a display screen and that are currently on, thereby providing illumination within the image.

The system may also identify any characteristics of the light source(s). Characteristics of the light source are those characteristics that identify, either directly or indirectly, a color temperature of the light source and an influence of the light source. Examples of characteristics may include, a lumen or nit value of the light source, a brightness of the light source, a color temperature of the light source, an age of the light source, and/or the like. The color temperature may be defined on a scale (e.g., warm color, cool color, dark, light, etc.), defined as a specific color or color value (e.g., RGB values of the color, red, blue, etc.), defined as a color hue (e.g., grey hue, magenta hue, cyan hue, etc.), color ratio (e.g., green:magenta, blue:yellow, red:cyan, etc.), and/or the like. The color tone adjustment system may identify an output color of the light source and, based upon identifying the color, may identify a color temperature of the illumination provided by the light source.

Identification of the color temperature of the light source may either be a direct measurement or direct information identifying the color temperature or may be information that can be used to infer the color temperature information. An example of a direct measurement or information would be information specifically identifying the color temperature (e.g., a color that is being output by a display device, light source information that identifies the color temperature such as light bulb information, etc.). An example of information that can be used to infer the color temperature information is the weather would could be used to infer the color temperature of natural light coming through a window.

The influence of the light source is an identification or measure of an area within the image that is illuminated by the light source. In other words, the influence identifies how much of the image is subject to the illumination of the light source, and where within the image the illumination of the light source occurs. One technique that may be used to identify the influence of the light source is that the color tone adjustment system may identify a brightness value of the light source. The brightness value may be used to calculate the range of the illumination from the light source and, therefore, determine a size or an area of the image that is influenced by the illumination of the light source. Using another technique to identify the influence of the light source, the system may analyze the image to determine areas of the image are close to a particular light source or which appear brighter than other areas of the image. Finding the brightest location may allow the system to move outward and identify those locations that are brighter than others within the image or locations that have a different color temperature as compared to other locations. It should be noted that the influence of the light source may be the entire image. Other techniques for identifying an influence of a light source are possible and contemplated, including the use of an artificial intelligence model, the use of historical information, the use of user supplied information, and/or the like. Additionally, a combination of the techniques may be utilized to identify the influence.

To identify characteristics of the light source(s), the system may access secondary information sources, which may be the same or different than the secondary information sources used to identify information related to the image, that may provide information related to characteristics of the light source(s) providing illumination within the image. The color tone adjustment system may query the secondary information source with the identification of the light source to identify the characteristics of the light sources. As an example, the system may query a secondary information source (e.g., Internet, database, data storage location, device or object manual or specification, software application, notes of a user, etc.), with the identifier or identification information for a light source. The secondary source may then return characteristics regarding the light source. As a non-limiting example, the color tone adjustment system may query a database storing device or object manuals with identification information for a particular display providing illumination within the image. The manual corresponding to the display may be returned and the system may further parse the manual to identify characteristics of the display, such as average brightness or a brightness range, color temperature of the display, size of the display, and/or the like.

The color tone adjustment system may also use an artificial intelligence model to identify characteristics of light sources. The model may be trained using a training dataset the includes light sources and characteristics of the light sources. When the color tone adjustment system is able to identify the light source, the model can digest this information and make predictions regarding the identified light source based upon the training of the model. As new information is received and identified, the model can automatically ingest the new information and any predictions or feedback related to the new information to become more refined and accurate over time.

The characteristics of light sources may also be identified using one or more of the techniques described in connection with identifying the light source itself. For example, the system may utilize other objects within the environment when identifying characteristics of the light source(s). As an example, to determine a characteristic of an uncontrollable light source, the system may provide instructions to control or change a characteristic of a controllable light source. By controlling the controllable light source, or an object that controls illumination of a light source (e.g., window covering, etc.), the system can identify changes to the color tone to then attribute the remaining color tone to a different light source. For example, the system may cause a display to display a blue image that provides a blue hue to the scene. Since the system now knows the exact color temperature or color tone that is attributable to the one light source, the system can infer the remaining color tone as belonging to the other light source(s) providing illumination within the scene. The system may also iteratively control the object to further refine or infer information regarding the other light source(s).

It should be noted that other techniques for identifying light sources and/or characteristics of light sources may be utilized. Additionally, the described techniques can be used in combination to identify the light sources providing illumination within an image and characteristics thereof.

If, at 302, a light source providing illumination within the image cannot be identified, the color tone adjustment system may adjust the color tone of the image using conventional techniques at 304. This means that the color tone adjustment system or other processor will auto white balance using conventional techniques with no input based upon the light sources. If there are multiple light sources, if the system is able to identify one light source but not another light source, the auto white balance may take into account the information for the one light source and make adjustments that relate to the influence of that light source and then use conventional techniques for portions of the image that are influenced by the unknown light source.

If, on the other hand, the color tone adjustment system can identify a light source providing illumination within the image, the system may adjust the color tone of the image based upon characteristics of the light source at 303. Adjusting the color tone may include providing the information regarding the light sources and characteristics of the light sources to the auto white balancing algorithm or mechanism. The AWB algorithm may then take this information into account when determining the red, green, and blue gain values for the image or portions of the image that are affected by the illumination of the light source. Thus, the color tone adjustment system may result in changes to a value of a color for only a portion of the image instead of the whole image. Additionally, the color tone adjustment system may result in changes to a value of a single color based upon the characteristics. In conventional techniques, when one color is changed, a corresponding color is also changed per the programmed ratio. However, since the color tone adjustment system knows the actual color temperature and influence of the illumination of the light source, the color tone adjustment system can make changes to individual or single RGB gain values based upon what color changes actually need to be made irrespective of which colors are connected within the programmed color curves or ratios. In other words, the described system can may adjustments to values of a color within the image irrespective of values of other colors within the image.

Adjustments to the color tone of the image may be performed very quickly so that the adjusted image may be included in a video feed transmission that is occurring in substantially real-time. In other words, the described system and method can be utilized even during transmission of a live video stream or video feed. Additionally, or alternatively, the adjustments that are identified or made to an image may be utilized to make adjustments to subsequent images or frames that are captured by an image capture device. In other words, the adjustments made to an image or frame may be identified and provided within instructions for adjustments to made to subsequent images or frames that are captured of the scene.

Further, the described system and method can be used in a post-processing step. The post-processing step means that the color tone adjustment system receives an image to be adjusted and then subsequently stored instead of transmitted back to the image capture device. For example, a user may select an image that is stored in a data storage location and perform processing on the image to make it appear closer to the real-world scene that was captured within the image. Selecting an auto white balancing icon or otherwise providing input to perform auto white balancing may cause the color tone adjustment system to perform the described steps to adjust the color tone of the image in a more sophisticated manner than conventional techniques, thereby providing an output image that is more likely to appear closer to the real-world scene than as found in the conventional techniques. Once processed, the image may be stored, printed, transmitted to a location chosen by the user, further adjusted or processed, and/or the like.

As an overall non-limiting example of the described system, the color tone adjustment system receives a frame from a video that is being captured of a video conferencing participant and surrounding environment. Within the image, are multiple light sources which are providing illumination within the image. In this example, there will be two light sources, a display screen displaying an image having a red hue and a window from which natural sunlight is shining through. While the display device is visible within the image, the sun is not. However, the illumination from both the display device and sun is visible within the scene and image. The color tone adjustment system identifies that the light sources are the display device and the sun.

The color tone adjustment system also identifies characteristics of the light sources. In this example, the display device is operatively coupled or in communication with the color tone adjustment system. This operative coupling or connection may be any type of connection that allows communication transmissions, for example, wireless connections, wired connections, communication through other devices, and/or the like. Thus, to identify characteristics of the display device, the color tone adjustment system queries or otherwise communicates with the display device to determine what is currently displayed on the display device. From this communication, the color tone adjustment system identifies that an image having a red hue is currently displayed on the display device. The color tone adjustment system may also be apprised of the exact color of the image, the size of the image, whether any other content is displayed on the display, a brightness level of the display device, and/or any other information that identifies, either directly or indirectly, details or characteristics about the illumination source and may identify a color temperature of the illumination source. The color tone adjustment system also identifies the area within the image that is affected by the illumination of the display device, or the influence of the display device illumination.

The sun is not in direct communication with the color tone adjustment system, so the color tone adjustment system cannot query the sun to determine the characteristics of the sun. However, the color tone adjustment system may query one or more secondary sources to determine characteristics about the sun. For example, the color tone adjustment system can query a weather application or Internet source to determine the weather for the location. This allows the color tone adjustment system to determine whether it is a sunny day, cloudy day, raining, and/or the like. The color tone adjustment system may also use this information to determine the time of day. The weather and/or time of day can influence the color tone of the illumination from the sun. The color tone adjustment system may also send instructions to the display device to change the color tone produced by the display device to better estimate the color tone of the illumination from the sunlight. By changing the illumination of the display device, the system can also identify the influence of the sunlight within the image.

Once the color temperature and influence of the display device and sunlight is identified, the color tone adjustment system can provide instructions to perform auto white balancing in view of these characteristics. In other words, the system adjusts the color tone of the image based upon the characteristics of the light sources. In this example, the instructions may include modifying the RGB values to compensate for the red color or hue that is produced from the display device for the area within the image that is influenced by the display device. The instructions may also include modifying the RGB values to compensate for the color temperature and influence of the sunlight. Unlike conventional techniques which use auto white balancing based upon programmed color ratios and apply these color ratio modifications to an entire image, the described system determines specific color tone adjustments that need to be made to compensate for characteristics of the illumination source. Additionally, the color tone adjustments may not be made across the entire image, but rather only the portions of the image that are influenced by the illumination of the light source. The adjusted image can then be transmitted to some location, for example, across a transmission medium in a video conference, to a data storage location, back to the image capture device for additional processing, and/or the like.

As will be appreciated by one skilled in the art, various aspects may be embodied as a system, method, or device program product. Accordingly, aspects may take the form of an entirely hardware embodiment or an embodiment including software that may all generally be referred to herein as a "circuit," "module" or "system." Furthermore, aspects may take the form of a device program product embodied in one or more device readable medium(s) having device readable program code embodied therewith.

It should be noted that the various functions described herein may be implemented using instructions stored on a device readable storage medium such as a non-signal storage device that are executed by a processor. A storage device may be, for example, an electronic, magnetic, optical, electromagnetic, infrared, or semiconductor system, apparatus, or device, or any suitable combination of the foregoing. More specific examples of a storage medium would include the following: a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a storage device is not a signal and is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals transmitted through a wire. Additionally, the term "non-transitory" includes all media except signal media.

Program code embodied on a storage medium may be transmitted using any appropriate medium, including but not limited to wireless, wireline, optical fiber cable, radio frequency, et cetera, or any suitable combination of the foregoing.

Program code for carrying out operations may be written in any combination of one or more programming languages. The program code may execute entirely on a single device, partly on a single device, as a stand-alone software package, partly on single device and partly on another device, or entirely on the other device. In some cases, the devices may be connected through any type of connection or network, including a local area network (LAN) or a wide area network (WAN), or the connection may be made through other devices (for example, through the Internet using an Internet Service Provider), through wireless connections, e.g., near-field communication, or through a hard wire connection, such as over a USB connection.

Example embodiments are described herein with reference to the figures, which illustrate example methods, devices, and program products according to various example embodiments. It will be understood that the actions and functionality may be implemented at least in part by program instructions. These program instructions may be provided to a processor of a device, a special purpose information handling device, or other programmable data processing device to produce a machine, such that the instructions, which execute via a processor of the device implement the functions/acts specified.

It is worth noting that while specific blocks are used in the figures, and a particular ordering of blocks has been illustrated, these are non-limiting examples. In certain contexts, two or more blocks may be combined, a block may be split into two or more blocks, or certain blocks may be re-ordered or re-organized as appropriate, as the explicit illustrated examples are used only for descriptive purposes and are not to be construed as limiting.

As used herein, the singular "a" and "an" may be construed as including the plural "one or more" unless clearly indicated otherwise.

This disclosure has been presented for purposes of illustration and description but is not intended to be exhaustive or limiting. Many modifications and variations will be apparent to those of ordinary skill in the art. The example embodiments were chosen and described in order to explain principles and practical application, and to enable others of ordinary skill in the art to understand the disclosure for various embodiments with various modifications as are suited to the particular use contemplated.

Thus, although illustrative example embodiments have been described herein with reference to the accompanying figures, it is to be understood that this description is not limiting and that various other changes and modifications may be affected therein by one skilled in the art without departing from the scope or spirit of the disclosure.

Further aspects of the invention are provided by the subject matter of the following numbered clauses:
1. A method, the method comprising: receiving, at a color tone adjustment system, an image of a scene; identifying, using the color tone adjustment system, a light source providing illumination within the image; and adjusting, using the color tone adjustment system, a color tone of the image based upon characteristics of the light source.
2. The method of clause 1, wherein the identifying the light source comprises accessing a data storage location identifying light sources within an environment.
3. The method of any one of the preceding clauses, wherein the identifying the light source comprises identifying the characteristics of the light source.
4. The method of clause 3, wherein the identifying the characteristics of the light source comprises accessing a data storage location storing light sources and characteristics of the light sources and querying the data storage location for the light source identified.
5. The method of any one of the preceding clauses, wherein the identifying the light source comprises querying a device operatively coupled to the color tone adjustment system.
6. The method of any one of the preceding clauses, wherein the identifying the light source comprises identifying an output color of the light source.
7. The method of any one of the preceding clauses, wherein the adjusting comprises adjusting a value of a color of a portion of the image.
8. The method of any one of the preceding clauses, wherein the adjusting comprises adjusting a value of a color of the image irrespective of values of other colors of the image.
9. The method of any one of the preceding clauses, wherein the identifying the light sources comprises controlling the illumination within the scene by providing instructions to a controllable device to identify the characteristics of an uncontrollable light source providing illumination within the image.
10. The method of any one of the preceding clauses, wherein the identifying the light source comprises querying a secondary information source for characteristics related to the light source.
11. A system, the system comprising: a processor; a memory device that stores instructions that, when executed by the processor, causes the system to: receive, at a color tone adjustment system, an image of a scene; identify, using the color tone adjustment system, a light source providing illumination within the image; and adjust, using the color tone adjustment system, a color tone of the image based upon characteristics of the light source.
12. The system of clause 11, wherein the identifying the light source comprises accessing a data storage location identifying light sources within an environment.
13. The system of any one of clauses 11-12, wherein the identifying the light source comprises identifying the characteristics of the light source.
14. The system of clause 13, wherein the identifying the characteristics of the light source comprises accessing a data storage location storing light sources and characteristics of the light sources and querying the data storage location for the light source identified.
15. The system of any one of clauses 11-14, wherein the identifying the light source comprises querying a device operatively coupled to the color tone adjustment system.
16. The system of any one of clauses 11-15, wherein the identifying the light source comprises identifying an output color of the light source.
17. The system of any one of clauses 11-16, wherein the adjusting comprises adjusting a value of a color of a portion of the image.
18. The system of any one of clauses 11-17, wherein the adjusting comprises adjusting a value of a color of the image irrespective of values of other colors of the image.
19. The system of any one of clauses 11-18, wherein the identifying the light sources comprises controlling the illumination within the scene by providing instructions to a controllable device to identify the characteristics of an uncontrollable light source providing illumination within the image.
20. A product, the product comprising: a computer-readable storage device that stores executable code that, when executed by a processor, causes the product to: receive, at a color tone adjustment system, an image of a scene; identify, using the color tone adjustment system, a light source providing illumination within the image; and adjust, using the color tone adjustment system, a color tone of the image based upon characteristics of the light source.

## Claims

1. A method, the method comprising:
receiving, at a color tone adjustment system, an image of a scene;
identifying, using the color tone adjustment system, a light source providing illumination within the image; and
adjusting, using the color tone adjustment system, a color tone of the image based upon characteristics of the light source.

2. The method of claim 1, wherein the identifying the light source comprises:
accessing a data storage location identifying light sources within an environment; and/or
identifying the characteristics of the light source.

3. The method of claim 2, wherein the identifying the characteristics of the light source comprises accessing a data storage location storing light sources and characteristics of the light sources and querying the data storage location for the light source identified.

4. The method of any one of the preceding claims, wherein the identifying the light source comprises:
querying a device operatively coupled to the color tone adjustment system; and/or
identifying an output color of the light source.

5. The method of any one of the preceding claims, wherein the adjusting comprises:
adjusting a value of a color of a portion of the image; and/or
adjusting a value of a color of the image irrespective of values of other colors of the image.

6. The method of any one of the preceding claims, wherein the identifying the light sources comprises controlling the illumination within the scene by providing instructions to a controllable device to identify the characteristics of an uncontrollable light source providing illumination within the image.

7. The method of any one of the preceding claims, wherein the identifying the light source comprises querying a secondary information source for characteristics related to the light source.

8. A system, the system comprising:
a processor;
a memory device that stores instructions that, when executed by the processor, causes the system to:
receive, at a color tone adjustment system, an image of a scene;
identify, using the color tone adjustment system, a light source providing illumination within the image; and
adjust, using the color tone adjustment system, a color tone of the image based upon characteristics of the light source.

9. The system of claim 8, wherein the instructions, when executed by the processor, cause the system to identify the light source by causing the system to:
access a data storage location identifying light sources within an environment; and/or
identify the characteristics of the light source.

10. The system of claim 9, wherein the instructions, when executed by the processor, cause the system to identify the characteristics of the light source by causing the system to access a data storage location storing light sources and characteristics of the light sources and query the data storage location for the light source identified.

11. The system of any one of claims 8-10, wherein the instructions, when executed by the processor, cause the system to identify the light source by causing the system to:
query a device operatively coupled to the color tone adjustment system; and/or
identify an output color of the light source.

12. The system of any one of claims 8-11, wherein the instructions, when executed by the processor, cause the system to adjust the color tone of the image by causing the system to:
adjust a value of a color of a portion of the image; and/or
adjust a value of a color of the image irrespective of values of other colors of the image.

13. The system of any one of claims 8-12, wherein the instructions, when executed by the processor, cause the system to identify the light sources by causing the system to control the illumination within the scene by providing instructions to a controllable device to identify the characteristics of an uncontrollable light source providing illumination within the image.

14. The system of any one of claims 8-13, wherein the instructions, when executed by the processor, cause the system to identify the light source by causing the system to query a secondary information source for characteristics related to the light source.

15. A product, the product comprising:
a computer-readable storage device that stores executable code that, when executed by a processor, causes the product to:
receive, at a color tone adjustment system, an image of a scene;
identify, using the color tone adjustment system, a light source providing illumination within the image; and
adjust, using the color tone adjustment system, a color tone of the image based upon characteristics of the light source.
